# DEMANDE DE BREVET EUROPEEN

(11) **EP 1 228 855 A1**
(43) Date de publication de la demande: **07.08.2002**
(21) Numéro de dépôt: 01450001.1
(22) Date de dépôt: 31.01.2001
(51) Int. Cl.: B30B 9/22

(54) **Pressoirs à dépression**

(71) Demandeur: Sciard, Alain, 33330 St. Emilion (FR); Sciard, Francoise, 33330 St. Emilion (FR)
(72) Inventeur: Sciard, Alain, 33330 St. Emilion (FR); Sciard, Francoise, 33330 St. Emilion (FR)

(57) **Abrégé**

Pressoir pneumatique qui comprend un socle (1) une grille (10) sur laquelle est placé en tas le marc (11) à presser. Une membrane (7)étanche et souple vient recouvrir le marc (11). Ladite membrane est rendue solidaire du rebord vertical du socle (1) par une sangle (8). Ladite sangle assure par serrage l'étanchéité de la jonction socle (1) membrane (7) en fond de gorge (6) ; Un tuyau (2) permet de relier l'intérieur de l'enceinte constituée par le socle (1) et la membrane (7) a une pompe à vin pour évacuation du vin de presse et création de vide dans ladite enceinte.

## Description

L'invention concerne les pressoirs pneumatiques utilisés pour séparer le vin de ses composants solides en fin de vinification.

Les pressoirs pneumatiques ressortent de deux classes différentes : Celle des pressoirs pneumatiques à pression qui font intervenir, après écoulage du vin de goutte et transfert du marc, des systèmes indépendants des cuves de vinification, généralement des cylindres tournants. Ces cylindres sont divisés en deux compartiments longitudinaux séparés par une membrane : du côté percé de trous formant grille le marc, de l'autre, étanche, de l'air dont on fait varier la pression. Lorsque l'on injecte de l'air comprimé la membrane vient s'appliquer sur le marc et exercer sa pression, ce qui a pour effet de faire jaillir le vin. On opère par cycles, chacun comprenant admission d'air comprimé, retour à la pression atmosphérique, brassage du marc par rotation du cylindre porteur. Les séquences sont programmées : la pression est réglable de 0 à 1 ou 2 atmosphères.

Les pressoirs pneumatiques à dépression, d'un type récent permettent d'obtenir un résultat comparable, sans transfert du marc et à l'abri de l'air. L'opération de pressurage se fait dans la cuve de vinification. Quand l'opération de vinification est terminée, le marc flotte en surface, le vin stagne en fond de cuve. Après aspiration du vin dit de goutte, à travers la grille de fond qui joue le rôle de filtre, le marc se tasse contre la dite grille. Un réservoir souple est introduit en partie haute et vient s'adapter aux parois de la cuve à la façon d'un liner de piscine. On admet alors à l'intérieur du réservoir souple un liquide, vin ou eau, lequel par son poids applique la poche souple sur les parois et réalise une étanchéité qui va permettre de faire le vide en partie basse : le réservoir souple joue le rôle de piston, la cuve celui du cylindre, entre les deux : le marc. Finalement le vin sort sous l'effet conjugué de trois forces : le poids du liquide, l'accroissement de ce poids en raison du déséquilibre crée par le vide en partie basse, l'effet de succion égal à la force précédente. L'écoulement du vin de presse se fait en plusieurs cycles : dépression retour à la normale, etc. ... La dépression obtenue est de l'ordre de 0,7 atmosphère, la force active totale de l'ordre de 1,6 atmosphère dont 0,2 atmosphère correspond à la pression hydrostatique du liquide, à titre d'exemple. Cette invention à fait l'objet du brevet n°9710589.

Ces systèmes ont chacun leurs avantages et leurs inconvénients. Pour les pressoirs pneumatiques à pression la mise en oeuvre est délicate et le matériel sophistiqué. Pour les pressoirs à dépression il y a nécessité d'adaptation du réservoir aux dimensions de la cuve (hauteur, diamètre), ce qui a pour effet d'en limiter l'usage à des installations ayant des cuves d'un modèle standard. En particulier les cuviers anciens avec cuves en ciment peuvent difficilement s'y adapter.

L'invention a pour but de mettre à la disposition de l'utilisateur un système de pressurage, utilisable à l'intérieur comme à l'extérieur de n'importe quel cuvier, simple et facile à mettre en oeuvre, sans précautions particulières. Le temps d'exposition du vin à l'air doit être réduit au minimum pour éviter l'oxydation et limiter les risques de pollution. Le choix de la dépression s'impose si l'on veut éviter l'écrasement des particules solides et l'apparition de goûts non souhaités. Il faut aussi pour diminuer toute dépense non rentable que les matériels normalement utilisés dans les chais puissent s'adapter au pressoir.

Conformément à l'invention ce but est atteint avec un pressoir à dépression où le marc est placé, après extraction de la cuve de vinification, sur une grille portée par un socle de même dimension, incliné sur l'horizontale de quelques degrés. Une membrane souple et imperméable à l'air et au vin vient recouvrir l'ensemble et se fixer au socle de façon étanche afin de délimiter une enceinte à l'intérieur de laquelle le vide est fait par une pompe à vin du type habituellement utilisé dans les chais. Lorsque la pompe est mise en route le vin libre, aspiré à travers la grille ruisselle sur la face supérieure du socle en suivant la pente et, est évacué par un tuyautage solidaire du socle ou de la membrane vers un récipient de recueil, puis l'air est à son tour évacué, la membrane appuie sur le marc : le vin de presse sort sous l'effet d'une force d'écrasement due à la pression atmosphérique à laquelle s'ajoute l'effet de succion.

Un pressoir à dépression conçu conformément à l'invention présente un certain nombre d'avantages :

Le système peut être fixe et faire partie du sol du cuvier sans constituer, étant donné son faible encombrement vertical, un obstacle important à la circulation des personnels et matériels auxiliaires. Le stockage des tuyaux, bassins d'écoulement, etc., peut s'y faire sans difficulté hors des périodes d'utilisation. Mobile, il s'adapte à tous les systèmes de vinification utilisés dans les chais anciens ou neufs à condition que les voies de circulation entre cuves le permettent. Le fonctionnement du pressoir à dépression est simple et sans danger en cas de fausse manoeuvre, car la pression de fonctionnement est limitée à une dépression partielle de plusieurs centaines de grammes et l'énergie stockée relativement faible peut-être libérée accidentellement sans conséquence pour les opérateurs. N'importe quelle pompe de chai peut produire le vide nécessaire au pressurage puisqu'elles affichent toutes des performances de l'ordre de 7 mètres d'eau à l'aspiration. En fin d'opération l'accessibilité du socle ou du bassin en particulier dans le cas du pressoir mobile permet une évacuation du marc sec dans des conditions de travail confortables manuellement ou avec des moyens mécaniques si l'on saisit par exemple directement la grille avec un élévateur. L'opération est d'ailleurs facilitée par la possibilité de diviser la grille en plusieurs secteurs individuellement transportables. Tous les automatismes peuvent s'adapter facilement à la commande des cycles de pression - dépression, puisqu'il suffit de stopper la pompe ou de la remettre en route : coupe à temps, manocontacteurs, etc. ...

L'invention est décrite ci-après à l'aide d'exemples et de références aux dessins joints dans lesquels :

La figure 1 est une vue d'extérieur en perspective d'une réalisation de l'invention.

La figure 2 est une coupe médiane du même dispositif, montrant la position des principaux éléments constitutifs du pressoir à dépression : socle, grille, bâche et sangle.

La figure 3 est un grossissement de la coupe des bords du socle du système selon les figures 1 et 2, de manière à faire apparaître l'interdépendance des éléments nécessaires à l'étanchéité de la membrane et du socle.

La figure 4 représente une coupe d'un autre mode de réalisation constitué par un bassin métallique transportable de très faible hauteur ainsi qu'un autre mode d'étanchéité de la fixation de la membrane sur son socle.

La figure 5 est une vue en coupe du même système mobile avec une grille en trois dimensions en forme de panier.

La figure 6 est une vue en perspective de la partie haute du système précédent en cours de pressurage.

La figure 7 montre une réalisation, à titre d'exemple, d'une membrane ayant la forme d'une poche.

La figure 8 montre un autre système d'étanchéité entre cuve et membrane, faisant intervenir un joint pneumatique du type chambre à air.

La figure 9 est une variante du système d'étanchéité précédent exposé selon la figure 4.

Les figures 10, 11 et 12 représentent un autre mode de réalisation : le réservoir souple jouant le rôle de bassin.

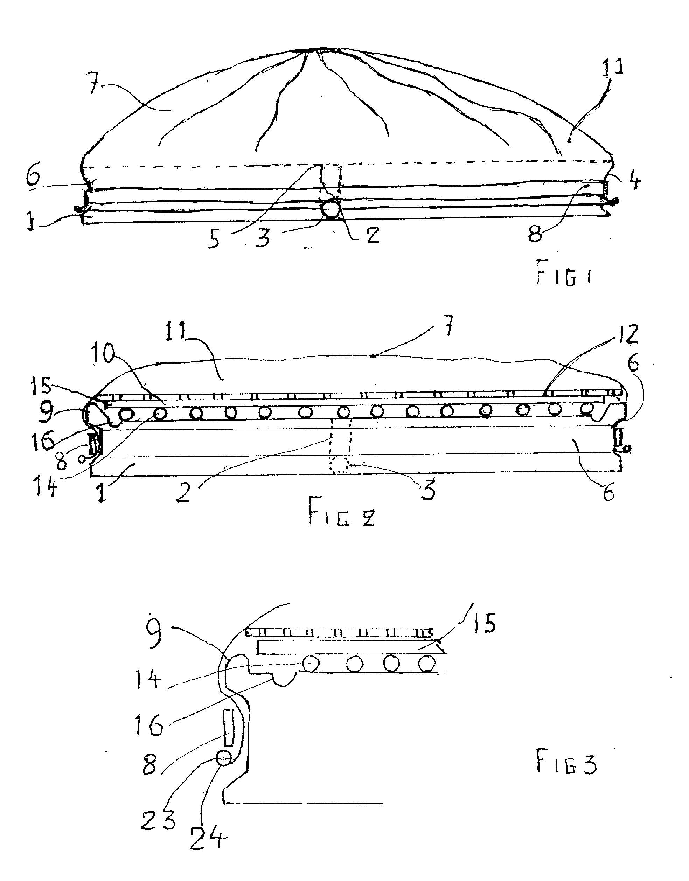

La figure 1 représente une vue d'ensemble du dispositif objet de l'invention : de bas en haut le socle (1) de grand diamètre, légèrement incliné sur l'horizontale, est à titre d'exemple non limitatif solidaire ou non du sol ; Il peut être réalisé en béton armé moulé ; un tuyau (2) coudé, du diamètre des tuyaux utilisés dans le cuvier est noyé dans l'épaisseur dudit socle (1) et débouche par son extrémité basse filetée (3) sur la paroi verticale (4) du socle (1). L'autre extrémité (5) affleure sur la face supérieure du socle (1). La paroi verticale (4) est cylindrique et pourvue d'une gorge (6), dans laquelle vient s'adapter la membrane (7) et la sangle (8) dont la double fonction est de retenir la membrane (7) et d' assurer l'étanchéité à l'air et au vin entre socle et membrane. Sous la membrane (7) le marc (11) à presser est disposé en tas.

La figure 2 représente une coupe de l'invention telle que décrite précédemment, selon un diamètre du socle. La figure 3 est un grossissement du bord du dispositif tel que présenté sur la figure (2).

La face supérieure du socle (1) est pourvue d'un rebord (9) destiné à centrer la grille (10) et à contenir le vin de presse. Le rebord (9), arrondi, participe à la tenue et à l'étanchéité entre membrane et socle. A titre d'exemple, la grille (10) est constituée d'une tôle percée (12) de préférence en inox portée par un croisillon à larges mailles formées par des barres en inox (14) et (15) soudées entre elles. La couche inférieure (14) est dans le sens de la pente, la couche supérieure (15) perpendiculaire à la première. Une dépression circulaire (16) raccordée au rebord (9) facilite l'écoulement du vin de presse vers l'entrée (5) du tuyau (2).

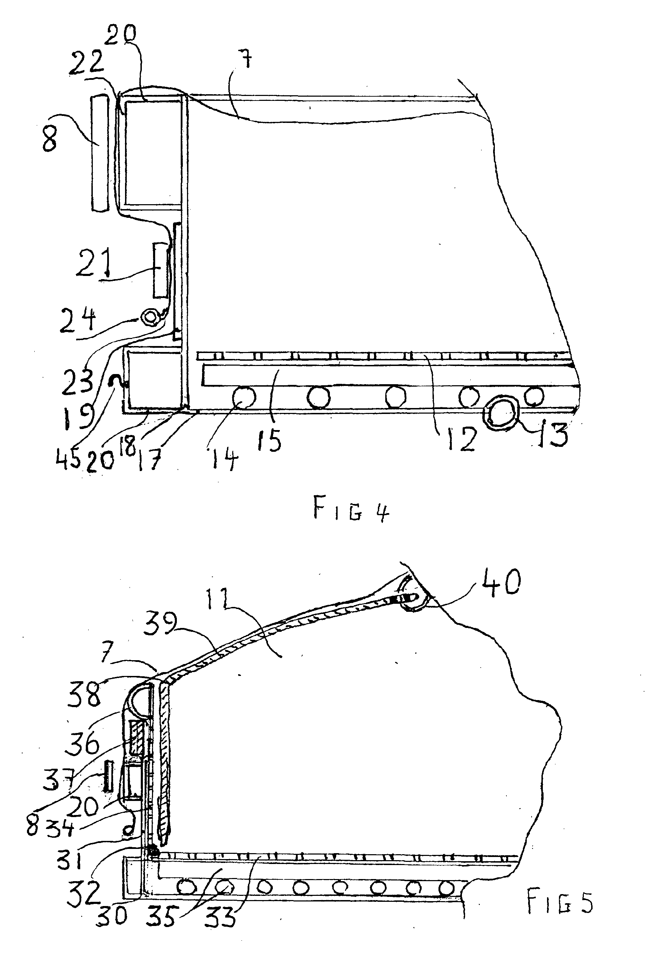

La figure 4 représente un autre mode de réalisation de la même invention. Le socle est remplacé par un bassin (17) en tôle inox par exemple circulaire de préférence de grand diamètre et de faible profondeur. La grille (12) au lieu d'être à la surface du socle repose sur le fond du bassin. La paroi verticale (18) de faible hauteur est renforcée par une surépaisseur (19) de la tôle, pour éviter les déformations lors de la mise sous vide, et par deux profilés en U (20) haut et bas. L'évacuation du vin se fait par un tuyautage (13) soudé au fond du bassin (17) Un double système de sangles (8) et (21) vient pour la première (8) appuyer fortement la membrane (7) sur la paroi verticale (22) du renfort supérieur (20), pour la seconde (21) assurer la retenue en empêchant le glissement du bord (23) de la membrane (7). A titre d'exemple, la structure de la membrane (7) est réalisée de telle manière que son appui sur le bord (22) du renfort supérieur (20) se fasse à frottement doux et que, de poche convexe au départ elle soit plate, par un agencement de ses plis et dans une position horizontale en fin de pressurage. Un bourrelet (24) obtenu par grossissement du plis en bordure, tel que filin à l'intérieur dudit plis, des oeillets tout autour du bord, permettent une fixation semi-rigide de la membrane (7) à des crochets (45) soudés sur le renfort inférieur (20).

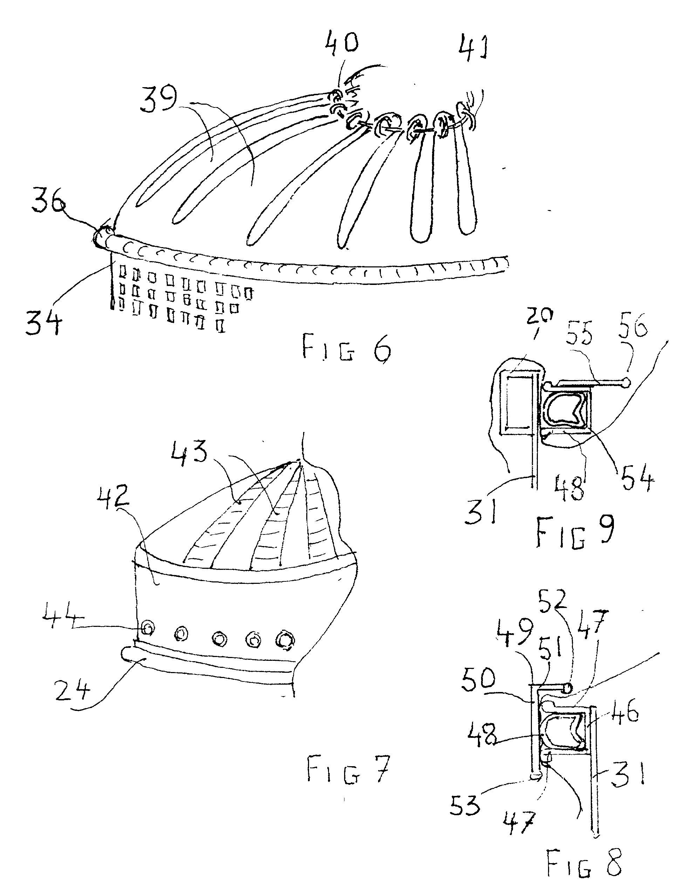

La figure 5 représente une vue partielle d'un autre mode de réalisation selon l'invention. Il diffère des précédents en ce que la grille portant le marc est à trois dimensions en forme de panier. Le socle est réduit à la seule fonction de porte grille ceci dans le but de réduire le poids des éléments constitutifs afin d'en faciliter la maniabilité. Le bassin (30) formant socle est semblable à celui de la figure 4. La hauteur de sa paroi verticale (31) est réduite au minimum nécessaire à la fixation de la membrane (7). La grille en forme de panier (32) par exemple cylindrique est composée d'une tôle de fond (33) percée de trous et indépendante des croisillons (35) formant support. La paroi verticale (34) également percée de trous est soudée au fond (33), les renforts (non représentés) confèrent à l'ensemble une rigidité suffisante pour permettre la saisie du panier (32) ; celui-ci peut être divisé en un ou plusieurs compartiments indépendants. Un bord arrondi (36) vient renforcer l'ouverture libre du panier et sert d'appui à la membrane (7) lorsque celle-ci est tendue. Entre le bord arrondi (36) et le bord supérieur (20) du bassin, un manteau extérieur (37), par exemple en fibre de coco, d'une épaisseur égale au diamètre du bord de grille (36), vient remplir l'espace compris entre : le dit bord de grille, le renfort supérieur (20) du socle, la paroi verticale du bassin (31) et la membrane (7). Ce rembourrage a pour but de réduire la tension de la membrane (7) et de faciliter l'écoulement du vin de presse en partie haute du panier. A l'intérieur du panier, plaqué contre la paroi un autre manteau (38) également à larges mailles et de même matière que le manteau (37) permet le maintien du marc (11) au-dessus du rebord (36) du panier et au-delà grâce à des languettes (39) taillées en pointe pour permettre au pliage, un recouvrement du marc.

La figure 6 permet de mieux comprendre le rôle desdites languettes en cours de pressurage. A l'extrémité de chacune de celle-ci un anneau (40) permet à un lien (41) d'assurer une fermeture lâche du manteau (38). La membrane en recouvrant le tout vient glisser sur cette surface malléable ce qui a pour effet de répartir la tension sur toute la surface du marc (11) en même temps que l'écoulement du vin de presse s'en trouve facilité.

La figure 7 montre à titre d'exemple un mode de réalisation d'une membrane (7) : le bord (23) cylindrique ou tronconique à un diamètre égal ou légèrement inférieur à celui hors tout des renforts (20), figure 4, ou (36) figure 5, de manière à s'y appuyer à frottement doux (ledit diamètre est le diamètre moyen dans le cas du bord tronconique). La partie convexe (42) est obtenue par des pliures (43) ou des rétrécissements obtenus par collage ou soudure. Ladite membrane doit être réalisée dans un matériau de qualité alimentaire, souple, résistant et élastique. Son bord peut être pourvu d'oeillets (44) pour faciliter le passage d'un filin et assurer la fixation sur des points fixes (45) du bassin (30). Dans le cas du système à 2 sangles, le glissement est rendu impossible par le grossissement du rebord formant bourrelet (24).

La figure 8 montre une autre réalisation de l'étanchéité entre membrane (7) et bord (31). Le rebord supérieur (20) de la cuve diffère des réalisations précédentes par le fait que le profilé circulaire en U est fixé par son côté fermé (46) sur la paroi (18) et forme une jante (47) qui emprisonne un joint plein ou une chambre à air (48). Dans le cas du joint plein, une sangle (8) vient appuyer la membrane (7) contre ledit joint. Dans le cas de la chambre à air (48) celle-ci vient appuyer la membrane (7) contre la paroi verticale (50) de la cornière circulaire (49). La face (51) horizontale de ladite cornière a un diamètre intérieur inférieur au diamètre extérieur de la jante (47) pour assurer la tenue de ladite cornière (49) quel que soit l'état de la chambre à air (48) (vide ou gonflé). L'arrête de la face (51) est arrondie pour éviter toute blessure de la membrane (7).

La figure 9 est la représentation d'un dispositif d'étanchéité qui diffère du précédent en ce que la jante (54) est intérieure à la paroi (31) de la cuve (17).

Un disque annulaire (55) est solidaire de la face supérieure de la jante (54), pour en accroître la rigidité. Le bord intérieur dudit disque (55) est pourvu d'un arrondi (56) comme dans le système décrit selon la figure 8. Le joint (57) est du type chambre à air ; par gonflage la membrane (7) est appliquée sur la face intérieure de la paroi verticale (21) du bassin (30). Ce dispositif d'obturation par l'intérieur est applicable au système tel qu'exposé selon la figure 5, à la condition toutefois que la paroi (34) du panier (32) ait une hauteur inférieure d'une épaisseur d'obturateur à la hauteur de la paroi verticale (31) du bassin (30) ; dans ce cas le rebord (36) dudit panier est solidaire de la face intérieure de la paroi (34).

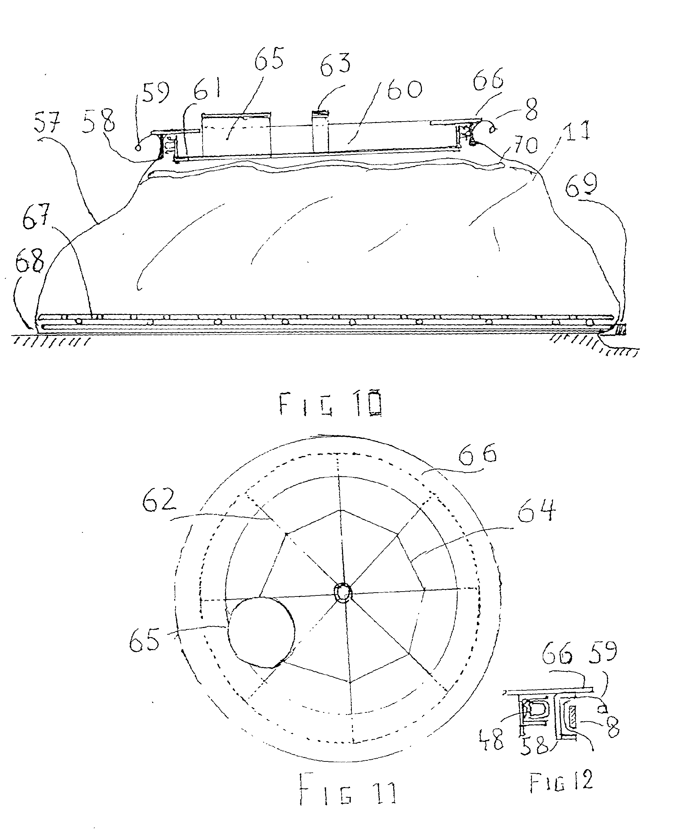

Les figures 10, 11 et 12 sont une autre représentation du système exposé selon les figures 1 et 4 :

Les récipients (17) ou (30) contenant le marc (11) sont remplacés par un réservoir entièrement souple, la membrane (7) a la forme d'une outre (57). Une pièce rigide (58) de même diamètre que le col (59) permet d'assurer la tenue dudit col en position ouverte ; L'étanchéité entre la pièce rigide (58) et le col (59) est obtenue à titre d'exemple par le serrage d'une sangle (8). Un obturateur (60) construit selon le principe des couvercles de garde-vins vient assurer l'herméticité entre la face intérieure (61) de la pièce rigide (58) et l'obturateur (60) par un joint gonflable (48). Pour éviter toute déformation de l'obturateur (60), des renforts (62) radiaux reliés à un tube axial (63), fileté pour permettre le branchement à une pompe sont soudés sur la face (61), ainsi qu'un ou plusieurs renforts concentriques (64) destinés à rigidifier l'ensemble fond (61) et renforts (62) et (64). Un tube de gros diamètre (65) avec tape de fermeture mobile permet la liaison avec un tire-marc Un arrêtoir (66) en forme de disque annulaire, soudé à la paroi verticale de l'obturateur (60) permet de le retenir au-dessus de la pièce rigide (58) lorsque le joint (48) n'est pas gonflé. Une grille (67), en plusieurs parties pour permettre l'introduction par le col (59), vient tendre le fond (68) et permet par filtrage l'écoulement du vin de presse à travers la prise de fond (69). Un tapis (70) en fibre de coco vient garnir la partie haute de l'outre (57) et facilite ainsi l'aspiration de l'air éventuellement du vin de presse expulsé en partie haute.

## Revendications

1. Pressoir pneumatique à dépression comprenant un socle (1) en béton armé, solidaire ou non du sol. Le socle (1) a par moulage en creux de sa paroi verticale (4) ou tout autre procédé, une gorge (6) circulaire surmontée d'un rebord (9) arrondi et surplombant la face supérieure (5) du socle (1) incliné sur l'horizontale de quelques degrés. Une membrane (7) en matériau souple, étanche et déformable, a son rebord (23) qui vient s'engager dans la gorge (6) et est contrainte d'y rester par une sangle (8). Une grille (10) comportant une tôle percée (12) portée par un croisillon à larges mailles (14) et (15), sert de support au tas de marc (11) à presser. Un tuyau coudé (2), noyé dans l'épaisseur du socle, a son extrémité haute (5) qui affleure la face supérieure du socle (1). Une dépression circulaire (16) assure la liaison avec l'orifice supérieur (5) du coude (2) relié à l'orifice de sortie (3) fileté.

2. Pressoir pneumatique à dépression comprenant un bassin (17)de faible hauteur. La paroi verticale (18) est renforcée en partie haute et basse par des renforts (20) formés de profilés en U soudés à ladite paroi (18). Un renfort d'épaisseur (19) constitue un renfoncement de la paroi verticale (18). Une sangle (8) vient appuyer le bord de la membrane (7) sur la face (22) externe du rebord supérieur (20) et assurer l'étanchéité du volume compris entre la membrane (7) et le bassin (17). Une autre sangle (21) vient appuyer l'extrémité (23) de la membrane (7) sur la paroi (18) ; un bourrelet (24) et des oeillets (44) permettent un raccordement à des crochets (45). Une grille (12) en un ou plusieurs morceaux est portée par un support constitué par des barres inférieures (14) et supérieures (15) assemblées en larges mailles.

3. Pressoir pneumatique à dépression où la grille plane support de marc est remplacée par un panier cylindrique (32) avec fond (33) et paroi verticale (34) renforcés par des éléments intérieurs. Le panier (32) en un ou plusieurs éléments est porté par des croisillons (35) eux-mêmes en un ou plusieurs morceaux. Le rebord supérieur (36) du panier sert de guide à la membrane (7) ; un manteau (37) extérieur en fibres de coco et un manteau intérieur (38) avec des languettes (39) des anneaux d'extrémité (40) réunis par un lien (41) assurent la tenue du marc (11).

4. Selon les revendications 1,2 et 3, la membrane est constituée par un matériau souple, étanche et de qualité alimentaire, avec bord (23) cylindrique ou tronconique de même diamètre ou d'un diamètre légèrement inférieur au diamètre hors tout du renfort (20) du bassin (17). La poche (42) convexe, constituant la couverture du tas de marc (11) est solidaire du bord (23) de la membrane (7), cette poche (42) est formée par rétrécissement du matériau utilisé. Le grossissement (24) du bord (23) de la membrane (7) peut-être percé en amont d'oeillets (44) destinés à retenir le bord (23) avec ou sans la deuxième sangle (21) par amarrage sur les points d'attache (45) solidaires de la paroi du renfort inférieur (20).

5. Selon les revendications 2, 3 et 4 la sangle supérieure peut être complétée ou remplacée par une modification de la structure du rebord supérieur (20). Le profilé est ouvert sur sa face verticale extérieure et constitue une jante (47) dans laquelle vient s'insérer un joint plein ou chambre à air (48) qui vient appuyer le bord (23) de la membrane (7) sur la face intérieure (50) d'une cornière circulaire (49) laquelle est retenue en position haute par sa face supérieure (51) d'un diamètre intérieur, inférieur à la dimension hors tout du rebord (20) du bassin (17) deux arrondis (52) et (53) terminent les bords de la cornière.

6. Selon les revendications 2, 4 et 5, le dispositif d'étanchéité, placé à l'intérieur de la cuve (17) est constitué par une jante circulaire (54) analogue à celle des obturateurs utilisés couramment pour les garde-vins. La chambre à air (48) vient appliquer après gonflage la membrane (7) sur l'intérieur de la paroi (31) de la cuve (17). Un disque annulaire (55) soudé sur le bord supérieur de la jante (54) est pourvu d'un arrondi (56).

7. Pressoir pneumatique à dépression comprenant un réservoir (57) souple en forme d'outre la paroi étant constituée par une membrane (7) de qualité alimentaire étanche à l'air et au vin. Le marc (11) est disposé à l'intérieur sur une grille (67) fragmentée. Le col (59) de l'outre est solidaire d'une pièce intérieure rigide (58) de même diamètre. Une sangle (8) assure par serrage l'étanchéité entre la membrane (7) du col (59) et la pièce rigide (58). Un obturateur (60) circulaire, renforcé par des rayons (62) et un ou plusieurs cercles (64) soudés entre eux et au fond (61) assure l'étanchéité lorsque le joint gonflable (48) est au contact du col (58). Un secteur annulaire (66) sert d'arrêtoir à l'obturateur (60). Deux tubes (63) et (65) soudés au fond (61) et aux renforts (62)et (64), une prise de fond (69) complètent le système. Un tapis (70) en fibre de coco est disposé en partie haute.
